# EUROPEAN PATENT APPLICATION

(11) **EP 1 091 322 A1**
(43) Date of publication of application: **11.04.2001**
(21) Application number: 99650092.2
(22) Date of filing: 04.10.1999
(51) Int. Cl.: G06T 15/00

(54) **Production of a survey animated digital model**

(71) Applicant: Digitech Research, Portmarnock, County Dublin (IE)
(72) Inventor: Shackleton, Christopher, Malahide, County Dublin (IE); Roche, Sean, Malahide, County Dublin (IE); O'Neill, Kenneth, Dublin 13 (IE)
(74) Representative: Weldon, Michael James

(57) **Abstract**

A process for producing a survey animated digital model for visualisation of such things as planning developments. Vector data is extracted from merged digital images (13). Attribute data is assigned to items such as trees or hedges. Ground level data attributes are made and a digital terrain model is developed (17) using point and breakline data. The model is completed by micro relief enhancement (19) and integration of digital terrain model data, orthophoto data, and the micro relief enhancement feature data.

## Description

The invention relates to production of a survey animated digital model.

Heretofore, the traditional approach for providing information about proposed developments such as those in planning applications has been to provide detailed drawings with "artist impressions" provided to help illustrate the proposal and bring it life. Such information is generally useful for professionals in the surveying and architectural fields. However, where a proposal needs to be brought to a wider audience such as in a consultation process for planning, the traditional approaches are very limiting. This is particularly the case where the proposal is quite substantial, such as a new road or golf course development. It is also the case that sketches and drawings are insufficient for providing information about developments to an audience such as potential members of a golf club or potential holiday-makers to a particular area.

It is therefore an object of the invention to provide a process for producing a survey animated model which may be used for visualisation of topography.

According to the invention, there is provided a process for producing a survey animated digital model comprising the steps of:-
generating a stereo model of a survey area;
generating an enhanced 3D map by assigning attributes to features;
generating a digital terrain model by assigning levels to ground points and generating a mesh of triangles interconnecting the ground level points;
generating an orthophoto by performing planometric rectification to eliminate radial bias distortion and perspective error;
performing micro relief enhancement of the enhanced 3D map by assigning library symbols and growth profiles to items of vegetation and forming multiple structural blocks for buildings;
translating the digital terrain model data into individual triangular faces consistent with the terrain surface, applying the orthophoto data in its correct geo-spatial location as a vertical and plannar image map over the terrain surface, and integrating the enhanced micro relief to provide a digital model; and
exporting the digital model to a rendering application to provide a survey animated digital model.

In one embodiment, the step of generating the enhanced 3D map comprises the sub-steps of assigning growth patterns to vegetation.

Preferably, the step of generating the digital terrain model comprises the sub-step of generating breakline information assigned to linear ground features such as road edges.

Preferably, the orthophoto is projected into a Cartesian form.

In another embodiment, the micro relief enhancement step comprises the sub-step of extracting mapping routines of the enhanced 3D map into a fixed format and generating a unique key code and a descriptor comprising parameter values and co-ordinates associated with each feature.

Preferably, the descriptor comprises height data extracted from the digital terrain model.

In another embodiment, vegetation growth projection data comprises vertical and linear growth data.

Preferably, the digital terrain model translation step comprises the sub-step of applying height level smoothing to the model to ensure a smooth macro relief ground profile.

According to another aspect, the invention provides a survey animated digital model whenever produced by a process as described above.

The invention will be more clearly understood from the following description of some embodiments thereof, given by way of example only with reference to the accompanying drawings in which:-
Figs. 1(a) and 1(b) are together a flow diagram illustrating a process of the invention for generating a survey animated digital model;
Fig. 2 is a sample photograph;
Fig. 3 is a map for the corresponding area to illustrate linear features;
Fig. 4 is a representation of an enhanced 3D map;
Fig. 5 is a scene from a digital model corresponding to the map segment of Fig. 4;
Fig. 6 is a representation of a digital terrain map mesh with linear breaklines at ground level;
Fig. 7(a) shows a mapping symbol for a tree and Figs. 7(b) and 7(c) show digital model scenes for year 0 and year 10 respectively;
Fig. 8 shows mapping lines for linear hedges and Fig. 9 shows a corresponding scene of the digital model;
Fig 10 shows building outline features and Fig. 11 shows a corresponding scene from the digital model; and
Fig. 12 is a sample digital model scene incorporating poles and Fig 13 shows a symbol for a pole.

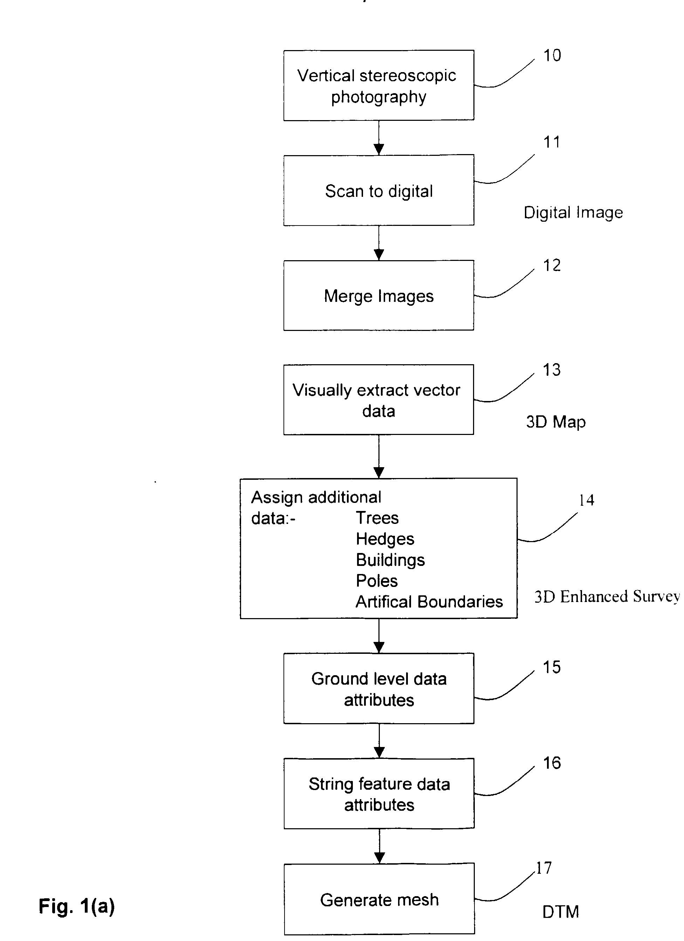

Referring to the drawings, there is shown a process 1 for producing survey animated digital model. The process 1 comprises steps 10 to 21 inclusive and these steps are illustrated in Figs. 2 to 13.

In step 10, there is vertical stereoscopic photography in which aerial photographs with an overlap of typically 60% are taken with an aircraft flying in a series of overlapping strips. The photo images are scanned to digital format and are processed in a photogrammetric workstation in step 11. The images are merged in step 12. Polarised glasses enable a user to view two images as a single stereo model. These images are un-scaled and easily identifiable points are co-ordinated on them. The skilled operator then visually extracts vector data in step 13. An example of a stereo model is shown in Fig. 2 and Fig. 3 shows traditional vector mapping.

In step 14 an enhanced 3D survey map is generated by assigning additional data to items such as trees, hedges, buildings, poles, and artificial boundaries. A tree is regarded as a discrete vegetation feature and a tree type is selected from a menu and spread and height data are assigned to it. Spread is computed by digitising a number of points around the tree canopy to enclose it. For a hedge, a general style and format is selected from a menu and this selection includes data regarding the style and general permeability of the hedge. The centre line and spread characteristics are digitised. For buildings, a structural form is selected such as flat, apex, or hip style roof and these forms are used to produce complex structures. For poles, again a type is selected from a menu such as "telegraph", "power", or "pylon". The orientation is then set. For artificial boundaries, a type such as wall or fence is selected and a sub-type is then selected such as brick, concrete, or barbed wire. The upper levels of the features are digitised as a 3D polyline entity.

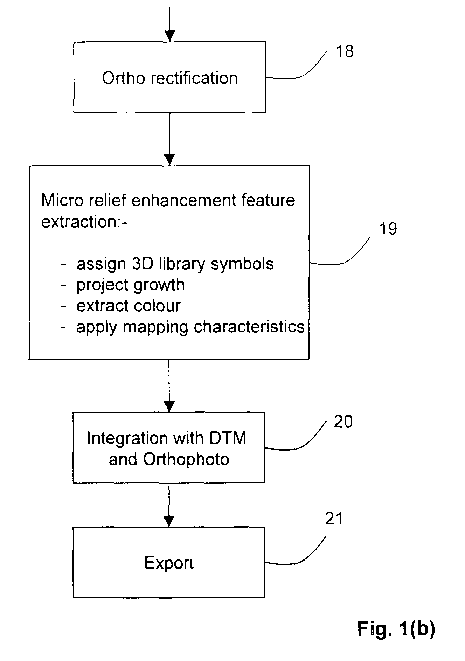

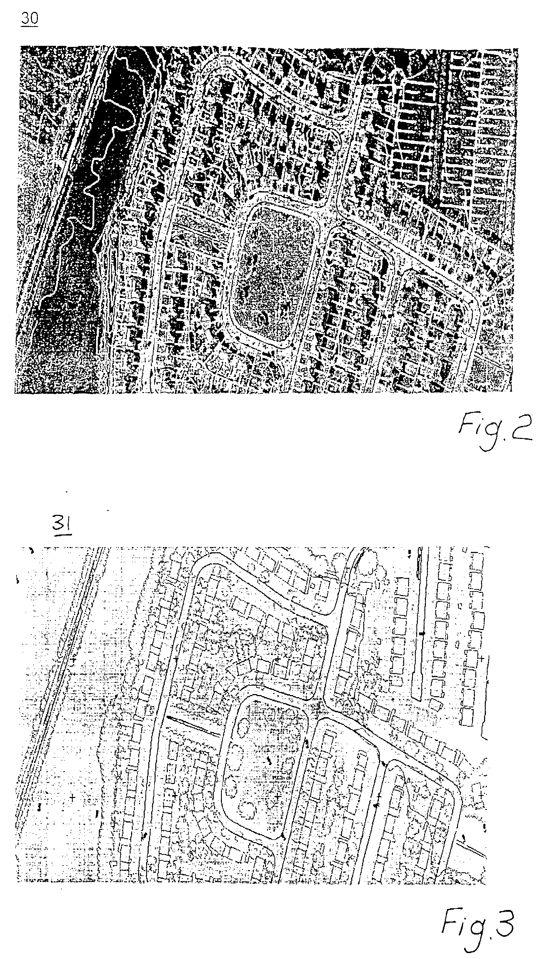

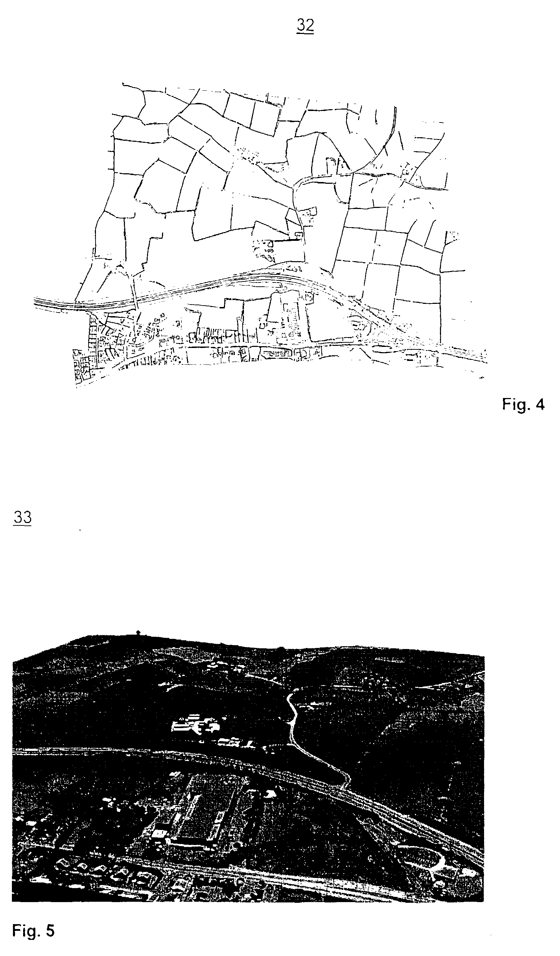

The final map, as shown in Fig. 4 is a 3D enhanced survey containing attribute data for extracting 3D model entities into a realistic and co-ordinated model space. This data is very important in later stages of the process for generating the digital model and a scene of a model is shown in Fig. 5. This scene is representative of the map segment shown in Fig. 4.

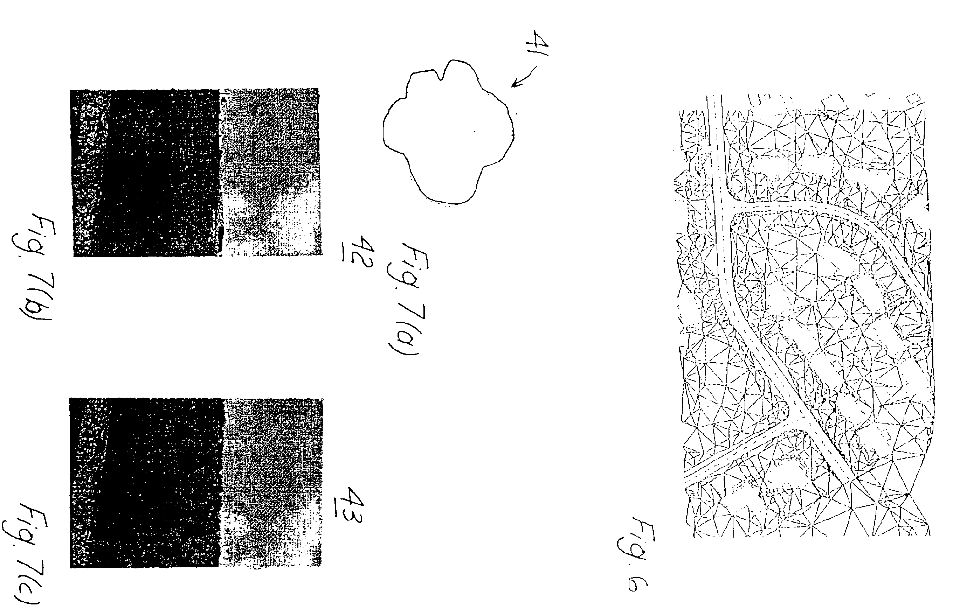

In step 15 a set of points is defined and an operator assigns a level to each of these points. These are representative of the ground level. In addition, in step 16 linear features on the ground, such as road edges, are used to generate breakline information. This produces an excellent mathematical representation of the ground surface. In step 17, when all of the points have been captured, the workstation automatically creates multiple triangles which lie between all of the captured points. The triangles do not cross the breaklines, thus better describing linear ground features. This produces a 3D mesh of triangles, as shown in Fig. 6.

In step 18, ortho-rectification takes place in which individual images are correctly located in 3D space. This takes into account the geo-referenced centre of the photographs and the rotation parameters which correspond to the aircraft's exact rotation along all three axes at the moment the image was taken. The referenced image is then projected into a Cartesian form and with attention paid to the ground profile, known camera errors, or distortions. The resulting sub-images are true-to-scale photomaps, and using a complex set of image-matching and biassing tools the sub-images are blended to form a single project-wide orthorectified photomap.

In step 19 there is micro relief enhancement feature extraction using the enhanced 3D map generated in step 14. Data from this map is extracted into a fixed format ASCII CARD file format. This file format is based on a unique key code to describe the feature type followed by a number of parameters and co-ordinates to act as descriptors. The entire mapping file is read and, dependant on the feature codes and associated attributes different sub-routines are executed. This is carried out as follows.

Tree-Discrete vegetation feature
- Assign a 3D library symbol 41 to the feature extract from the DTM, as shown in Fig. 7(a)
- Assign spread and height above ground. Heights are extracted from the existing Digital Terrain model. Spread is computed by digitising a number of points around the tree canopy to enclose it.
- Assign age to trees - nominal for existing or actual for new of proposed planting.
- Assign growth formula to trees (a parametric equation) which describes the following characteristics: height, height/depth ratio, permeability. Fig. 7(b) shows an image 42 for year 0 and Fig. 7(c) an image 43 for year 10.
- For deciduous tree types, enable seasonal changes in the defined imagery and opaque maps, to allow for changes on foliage colours and for loss of foliage in winter.
- For new tree plantings, allow also for statistical loss and propagation effects.

### Hedge Linear vegetation features

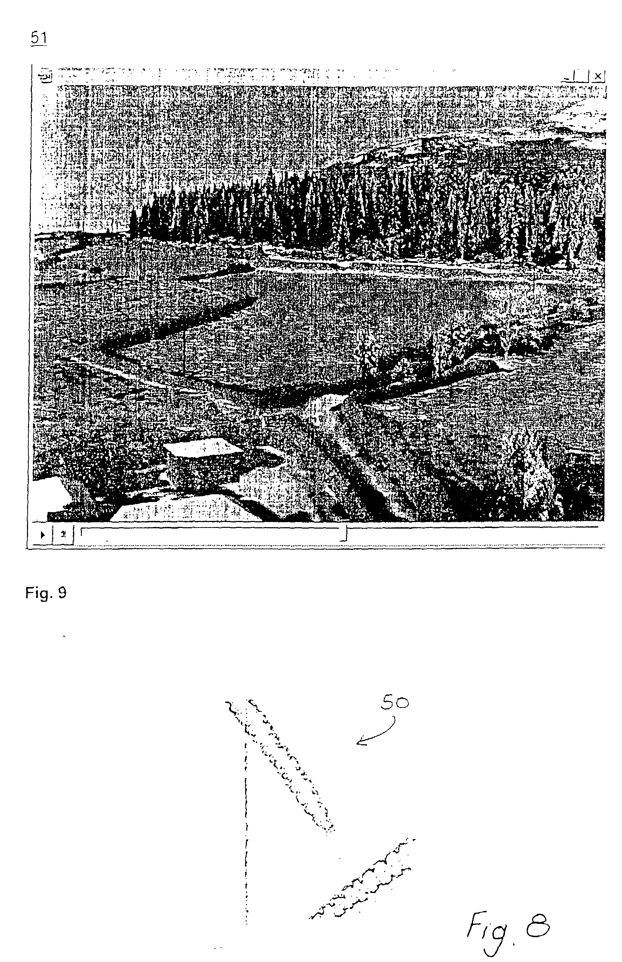

- Create vertical projections of the spread canopy down to ground level. Build sub-TINS of individual hedgegrows. This incorporates the ground projected canopy lines and centre line to create thirty forms of the hedgegrows which correctly follow the horizontal, vertical, and spread characteristics. Mapping lines 50 are shown in Fig. 8 and a sample image in Fig. 9.
- Apply image mapping and permeability characteristics to the hedge, dependant on the parameters passed by the photogrammetric operator and the length of the various features.
- Assign growth formula to hedgegrows, which describes height and permeability.

### Building Structure

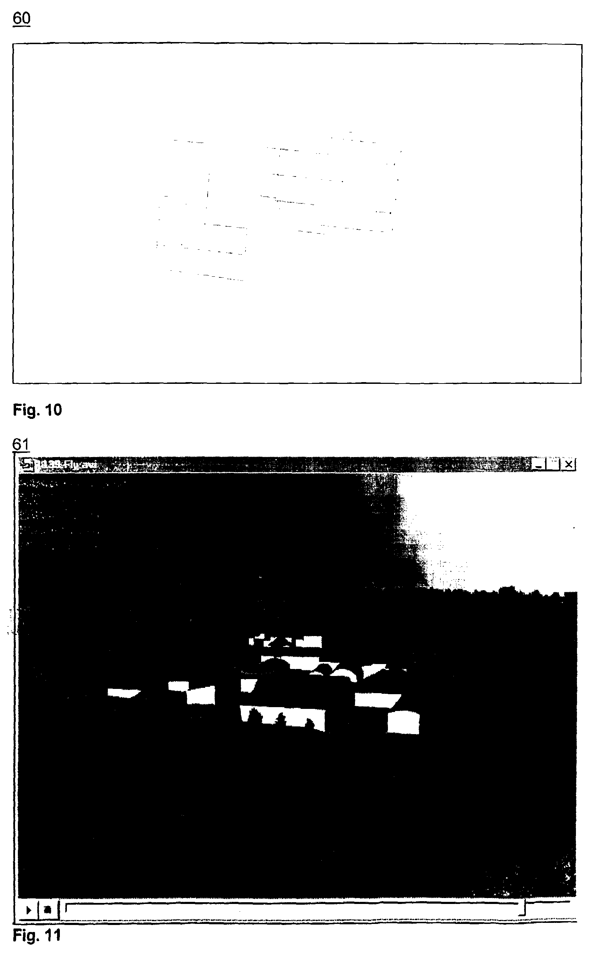

- Form multiple structural blocks from the basic structural forms. Outlines 60 are shown in Fig. 10 and an extracted model 61 is shown in Fig. 11.
- Extract roof colour from the geo-referenced photo images.

### Poles

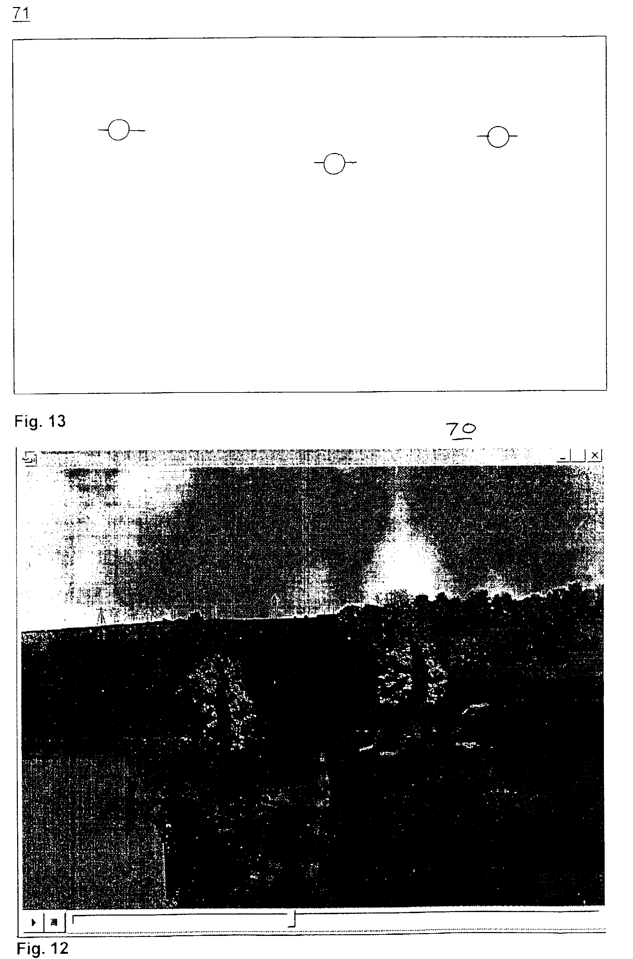

- Generate 3D blocks based on the pole type selected for the feature
- For direction-specific features rotate in accordance with the mapping data
- Pylons are created by a specific technique, and are grown fractally based on their height and spread. This fractal growth enables structures to maintain a consistent form, which does not lose realism as it increases in height and size.
- Lighting entities will have built-in lighting routines based on the light type/sources selected at mapping time all lighting controls will be associated to enable global changes to be effected with ease. This will allow lighting layouts and designs to be evaluated.
- An image 70 with poles is shown in Fig. 12, and a pole symbol 71 is shown in Fig. 13.

### Artificial Boundaries

- Convert the feature into a 3D polyline.
- Extrude feature so that it intersects with the digital terrain model.
- Assign mapping materials to the now 3D surface based on its length and feature type/sub-type. Opacity mapping also to be applied to fencing (post and rail, barb wire, wooden cross) dependant on the type assigned at the map data collection stage.

Finally, in step 20 DTM data is translated into individual triangular faces consistent with the terrain surface and a high-level smoothing is applied to ensure a clean and smooth macro relief ground profile. The ortho imagery is applied in its correct geo-spatial location and placed as a vertical and planar image map over the new surface. This creates an effective background basis for an animated model.

The micro relief generated in step 19 is then integrated into the completed model to provide a single realistic visualisation of the environment. This visualisation is essentially 4-dimensional as changes in time and season are included.

The data is exported in step 21 to a rendering application for processing into ray traced single or multiple (animated) images.

This provides a survey animated digital model which may be used for visualisation of a landscape as a graphical and interactive aid for such things as concept and project development.

The invention is not limited to the embodiments described but may be varied in construction and detail within the scope of the claims.

## Claims

1. A process for producing a survey animated digital model comprising the steps of:-
generating (12) a stereo model of a survey area;
generating (14) an enhanced 3D map by assigning attributes to features;
generating (15-17) a digital terrain model by assigning levels to ground points and generating a mesh (40) of triangles interconnecting the ground level points;
generating (18) an orthophoto by performing planometric rectification to eliminate radial bias distortion and perspective error;
performing micro relief enhancement (19) of the enhanced 3D map by assigning library symbols (50,60,71) and growth profiles to items of vegetation and forming multiple structural blocks for buildings;
translating the digital terrain model data into individual triangular faces consistent with the terrain surface, applying the orthophoto data in its correct geo-spatial location as a vertical and planar image map over the terrain surface, and integrating (20) the enhanced micro relief to provide a digital model; and
exporting (20) the digital model to a rendering application to provide a survey animated digital model

2. A process as claimed in claim 1, wherein the step of generating the enhanced 3D map (14) comprises the sub-steps of assigning growth patterns to vegetation.

3. A process as claimed in claims 1 or 2, wherein the step of generating the digital terrain model comprises the sub-step of generating (16) breakline information assigned to linear ground features such as road edges.

4. A process as claimed in any preceding claim, wherein the orthophoto is projected (18) into a Cartesian form.

5. A process as claimed in any preceding claim, wherein the micro relief enhancement step (19) comprises the sub-step of extracting mapping routines of the enhanced 3D map into a fixed format and generating a unique key code and a descriptor comprising parameter values and co-ordinates associated with each feature.

6. A process as claimed in claim 6, wherein the descriptor comprises height data extracted from the digital terrain model.

7. A process as claimed in claims 6 or 7, wherein vegetation growth projection data comprises vertical and linear growth data.

8. A process as claimed in any preceding claim, wherein the digital terrain model translation step comprises the sub-step of applying height level smoothing to the model to ensure a smooth macro relief ground profile.

9. A process substantially as described with reference to the drawings.

10. A survey animated digital model whenever produced by a process as claimed in any preceding claim.
